# EUROPEAN PATENT APPLICATION

(11) **EP 4 734 654 A1**
(43) Date of publication of application: **29.04.2026**
(21) Application number: 24831704.2
(22) Date of filing: 14.06.2024
(51) Int. Cl.: H04W 88/04, H04W 8/00, H04W 16/26, H04W 40/12, H04W 40/34, H04W 92/18

(54) **BASE STATION, COMMUNICATION DEVICE, COMMUNICATION METHOD, AND CONTROL PROGRAM**

(30) Priority: 26.06.2023 JP 2023104563
(71) Applicant: Canon Kabushiki Kaisha, Tokyo, 146-8501 (JP)
(72) Inventor: YUKIMASA Koji, Tokyo 146-8501 (JP)
(74) Representative: Canon Europe Limited
(86) International application number: PCT/JP2024/021592
(87) International publication number: WO 2025/004839

(57) **Abstract**

A base station is disclosed including, in a case where communication between a first user equipment (UE) and the base station is in a first state where relay communication to be implemented via a second UE for relaying communication is executed, acquisition means for acquiring first signal strength information indicating a signal strength between the first UE and the second UE and second signal strength information indicating a signal strength between the first UE and a third UE that is disconnected from the first UE, and comparison means for comparing the first signal strength information with the second signal strength information in the first state. The first signal strength information and the second signal strength information are information indicating signal strengths of a same physical channel.

## Description

### Technical Field

The present invention relates to a base station, a communication device, a communication method, and a control program.

### Background Art

In recent years, the 3rd Generation Partnership Project (3GPP^{®}) has been developing the specifications of Long Term Evolution (LTE) and 5G New Radio (NR). Among them, a standard specification called Sidelink communication (hereinafter referred to as "Sidelink") has been developed. In this specification, the implementation of direct wireless communication for devices to communicate without involving a mobile communication network (core network) has been studied.

The 3GPP^{®} has also been developing a specification to expand the communication coverage area of Sidelink using a function (Sidelink relay function) that relays Sidelink communication via a relay device (relay user equipment (UE)). The 3GPP^{®} also defines means for a communication terminal (remote UE) to switch from communication (indirect path) for connecting to a base station via a relay UE to direct communication (direct path) for connecting to the base station, and means for switching from the direct path to the indirect path.

PTL 1 proposes improvements to the issues that arise during a procedure (discovery) when a remote UE connects to a base station via a relay UE.

### Citation List

### Patent Literature

PTL 1: Japanese Unexamined Patent Application Publication No. 2018-535594

### Summary of Invention

### Technical Problem

The 3GPP^{®} has not currently defined any determination technique during switching from an indirect path to another indirect path. Accordingly, there is an issue that it is difficult to select an appropriate relay user equipment (UE).

### Solution to Problem

According to an aspect of the present invention, a base station includes, in a case where communication between a first user equipment (UE) and the base station is in a first state where relay communication to be implemented via a second UE for relaying communication is executed, acquisition means for acquiring first signal strength information indicating a signal strength between the first UE and the second UE and second signal strength information indicating a signal strength between the first UE and a third UE that is disconnected from the first UE, and comparison means for comparing the first signal strength information with the second signal strength information in the first state. The first signal strength information and the second signal strength information are information indicating signal strengths of a same physical channel.

### Advantageous Effects of Invention

According to one aspect of the present invention, it is possible to select an appropriate relay user equipment (UE) and switch a path to an indirect path with higher communication quality while continuing services.

Other features and advantages of the present invention will become more apparent by the following description with reference to the attached drawings. It is assumed that in the attached drawings, same or similar components are denoted by the same reference numerals. Brief Description of Drawings

The accompanying drawings, which are incorporated in and constitute a part of the specification, illustrate embodiments of the present invention and, together with the description, serve to explain the principles of the present invention.
[Fig. 1] Fig. 1 is a diagram illustrating a configuration example of a communication system according to an embodiment of the present disclosure.
[Fig. 2] Fig. 2 is a block diagram illustrating a functional configuration example of a base station according to the present embodiment.
[Fig. 3] Fig. 3 is a block diagram illustrating a functional configuration example of a remote user equipment (UE) according to the present embodiment.
[Fig. 4] Fig. 4 is a block diagram illustrating a functional configuration example of a relay UE according to the present embodiment.
[Fig. 5] Fig. 5 is a schematic diagram illustrating a physical channel of a sidelink.
[Fig. 6] Fig. 6 is a sequence diagram illustrating an example of exchange between communication devices according to a first embodiment.
[Fig. 7] Fig. 7 is an example of a flowchart between communication devices according to the first embodiment.
[Fig. 8] Fig. 8 is an example of a flowchart between communication devices according to the first embodiment.
[Fig. 9] Fig. 9 is an example of a flowchart between communication devices according to the first embodiment.
[Fig. 10] Fig. 10 is an example of a diagram illustrating a configuration example of a communication device according to a second embodiment.
[Fig. 11] Fig. 11 is an example of a sequence diagram between communication devices according to the second embodiment.

### Description of Embodiments

Embodiments will be described in detail below with reference to the attached drawings. The following embodiments are not intended to limit the invention described in the claims. A plurality of features is described in the embodiments. However, not all the features are necessarily deemed to be essential to the invention, and the features may be combined as appropriate. Further, in the attached drawings, the same or similar components are denoted by the same reference numerals, and repeated descriptions are omitted.

### [First Embodiment]

### (System Configuration)

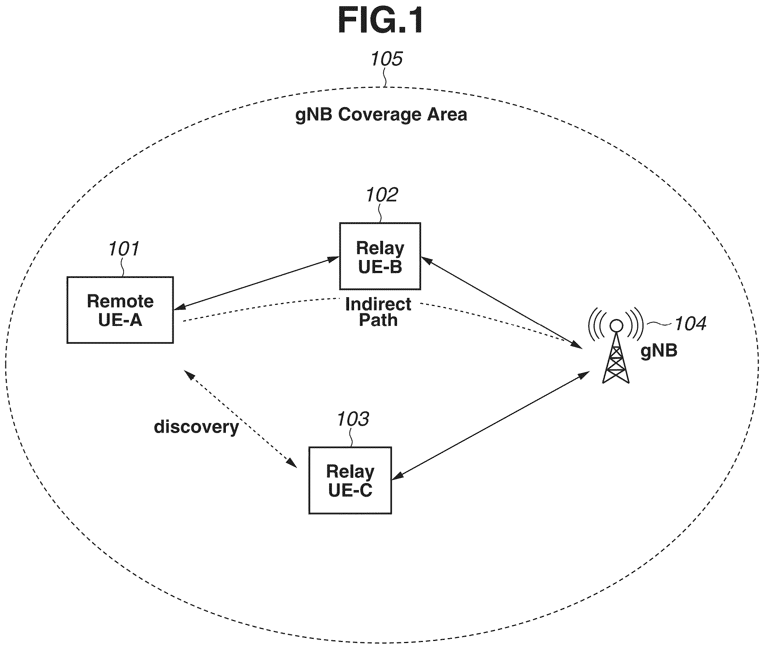

Fig. 1 is a diagram illustrating a configuration example of a system according to a first embodiment. The system according to the present embodiment includes user equipments (UEs) 101 to 103, a gNB 104 serving as a base station, and a core network (not illustrated) connected to the gNB 104 through a fiber or the like. The term "gNB" is an abbreviation for gNodeB, and the term "gNodeB" is an abbreviation for next Generation NodeB. The term "UE" is an abbreviation for User Equipment.

In the system illustrated in Fig. 1, a Remote UE-A (101), a Relay UE-B (102), and a Relay UE-C (103) are located within a coverage area (105) of the gNB (104).

The Remote UE-A (101) communicates with the gNB (104) using Sidelink relay communication. The Relay UE-B (102) operates as a relay UE to relay communication between the Remote UE-A (101) and the gNB (104) by using a Sidelink relay function. Specifically, the Remote UE-A connects to the base station through an indirect path (indirect path illustrated in Fig. 1) via the Relay UE-B. The Remote UE-A communicates data with the base station and devices and the like on the core network (not illustrated). The term "Uu link" to be described below refers to a link for the Remote UE-A to establish direct communication with the gNB without involving the relay UE.

The Relay UE-C (103) includes the Sidelink relay function and thus can operate as a relay UE. The Relay UE-C (103) is in a state of being connected to the gNB (104).

The Remote UE-A 101 is configured to transmit a discovery signal to a neighboring UE (that is, Relay UE-C 103) so as to search for the Relay UE-B 102 or another piece of relay UE (candidate relay UE). The Remote UE-A 101 is also capable of receiving a response signal corresponding to the discovery signal.

The Relay UE-C 103 is capable of responding to the discovery signal from the Remote UE-A 101, and the Relay UE-C 103 is also configured to transmit the discovery signal to the neighboring UE for itself.

The Relay UE-B 102, which serves as a relay UE, is also capable of responding to the discovery signal and transmitting the discovery signal to the neighboring UE, like the Relay UE-C 103.

### (Functional Configuration of Device)

Next, a functional configuration of a communication device according to the present embodiment will be described. The configuration of each functional block to be described below is merely an example.

Some (or all in some cases) of the functional blocks to be described may be replaced with other functional blocks having similar functions. Some of the functional blocks may also be omitted, and further functional blocks may be added. Alternatively, one functional block to be described below may be divided into a plurality of functional blocks, or a plurality of functional blocks may be integrated into one functional block. Alternatively, only some of the functional blocks may be composed of hardware, and the other functions may be composed of software. In a case where each functional block is composed of software, a processor that constitutes each of control units 201, 301, and 401 to be described below executes control programs for implementing functions stored in storage units 202, 302, and 402 to be described below. The function serving as the functional block can thereby be provided.

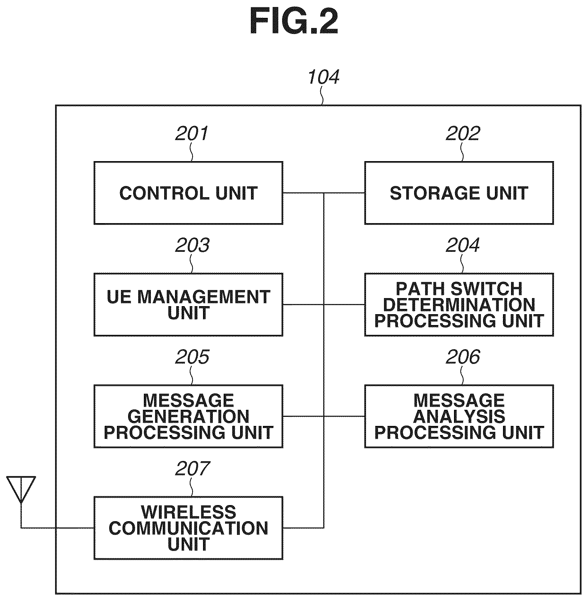

Fig. 2 is a block diagram illustrating a functional configuration example of the gNB (104) according to the present embodiment. In Fig. 2, the control unit 201 controls the operation of the base station. The storage unit 202 stores information about communication and information used for the control unit 201 to perform control. A management unit 203 manages information about UEs within a base station area. The information about UE to be managed includes an identification (ID) of a subordinate UE and a measurement result (signal strength of Uu link, etc.) reported from the subordinate UE. A processing unit 204 determines whether each UE managed by the management unit 203 is to be connected through an indirect path or a direct path. A message generation processing unit 205 generates a message to be used for path switching instruction. A message analysis processing unit 206 analyzes the message received from the subordinate UE. A communication unit 207 transmits and receives information via wireless communication with the subordinate UE, and performs transmission processing for messages generated by the message generation processing unit 205 and reception processing for messages from the subordinate UE.

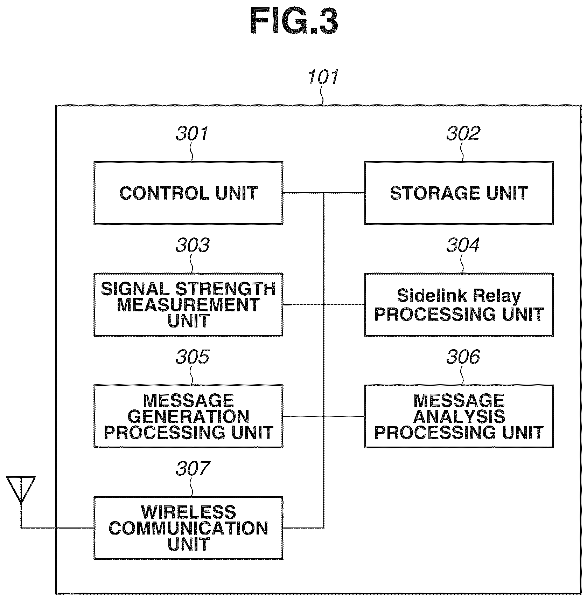

Fig. 3 is a block diagram illustrating a functional configuration example of the remote UE (101) according to the present embodiment. In Fig. 3, the control unit 301 performs control of the operation of the remote UE. The storage unit 302 stores information about communication and information to be used for the control unit 301 to perform control. A measurement unit 303 measures the "signal strength with the relay UE (relay link)", the "signal strength with the base station (Uu link), and the "signal strength between a candidate relay UE", from the remote UE. A processing unit 304 establishes a Sidelink connection with the relay UE, thereby making it possible to connect to the base station through the relay function of the relay UE (that is, through an indirect path). A generation unit 305 generates a discovery signal to be transmitted to a neighboring relay UE, and a RRC Reconfiguration Complete message and Measurement Report to be transmitted to the base station.

A message analysis processing unit 306 analyzes the discovery signal transmitted from the neighboring relay UE, the response signal, and messages such as an RRC Reconfiguration message transmitted from the base station. A communication unit 307 transmits and receives information via wireless communication with the neighboring relay UE and the base station, and performs processing of transmitting messages generated by the message generation processing unit 205 and processing of receiving messages from the neighboring relay UE and the base station.

The signal strengths measured by the signal strength measurement unit 303 are stored in the storage unit 302, and information about a discovery reference signal strength SD-RSRP to be described below is also stored.

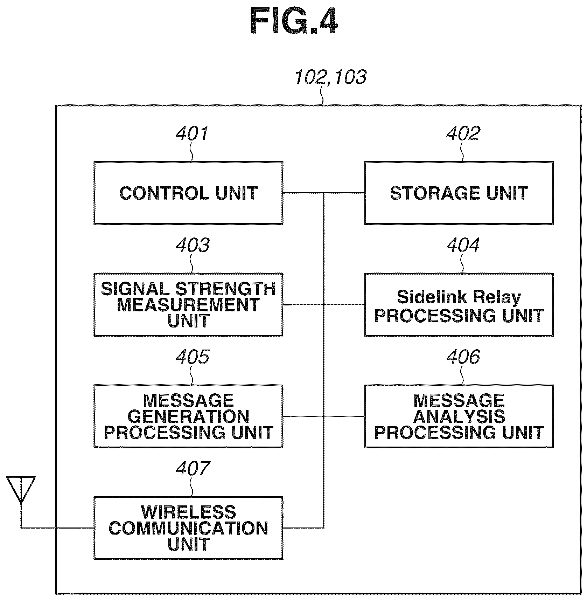

Fig. 4 is a block diagram illustrating a functional configuration example of the relay UE 102 and 103 according to the present embodiment. In Fig. 4, descriptions of functional blocks similar to those illustrated in Fig. 3 are omitted. A functional unit 403 measures the "signal strength with the relay UE (relay link)" from the relay UE. A processing unit 404 implements the relay function to connect the remote UE that has established the Sidelink connection to the base station via the relay UE. A functional unit 405 transmits a discovery signal to the neighboring remote UE and transmits a response to the discovery signal transmitted from the remote UE. The functional unit 405 also generates an RRC Reconfiguration Complete message and Measurement Report to be transmitted to the base station. A message analysis processing unit 406 analyzes the discovery signal transmitted from the remote UE, and messages such as the RRC Reconfiguration message transmitted from the base station.

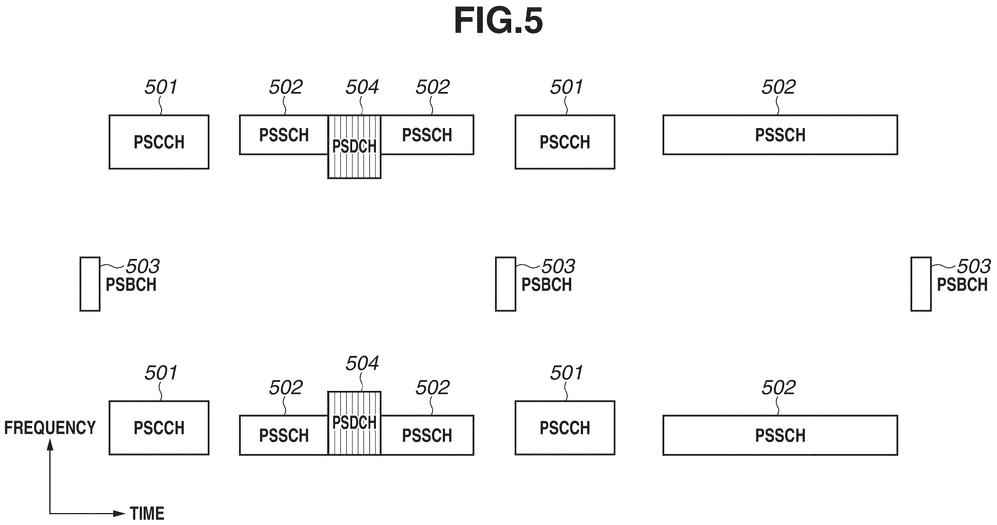

Fig. 5 is a diagram illustrating a configuration example of a physical channel in Sidelink communication. The vertical axis indicates a frequency, and the horizontal axis indicates time. The term "physical channel" refers to a channel that can be divided by a physical resource such as a frequency and time.

A Physical Sidelink Control CHannel (PSCCH) 501 is a physical channel for exchanging control information in Sidelink communication. The control information is information indicating the frequency of data transmitted within the PSSCH to be described below, allocation in resource blocks segmented by time, and the like.

A Physical Sidelink Shared CHannel (PSSCH) 502 is a physical channel for exchanging a data payload or additional control information in Sidelink communication.

A Physical Sidelink Broadcast CHannel (PSBCH) 503 is a physical channel for synchronization in Sidelink communication. The PSBCH 503 is periodically transmitted together with a sidelink synchronization signal block Sidelink-Synchronization Signal Block (S-SSB) at a temporal frequency other than a resource pool slot.

A Physical Sidelink Discovery CHannel (PSDCH) 504 is a physical channel that searches for UEs (discovery) in Sidelink communication. A UE (search UE) that performs a search periodically transmits a discovery request signal. A UE (searched UE) that receives the discovery request signal retrieves required information and transmits a response to the search UE. For example, the searched UE checks the presence and measures a signal strength. The signal strength measurement using Sidelink Discovery Reference Signal Received Power (SD-RSRP) is defined in technical specifications TS 36.214 5.1.22 of 3GPP^{®}.

The following signal strength measurement method may be used. First, the search UE transmits a PSDCH 504 having an enabled Cyclic Redundancy Check (CRC) in discovery. The searched UE receives a reference signal for the PSDCH 504, and the signal strength measurement unit 403 measures the signal strength of the reference signal and transmits information regarding the value of the signal strength to the search UE.

### (Processing Example)

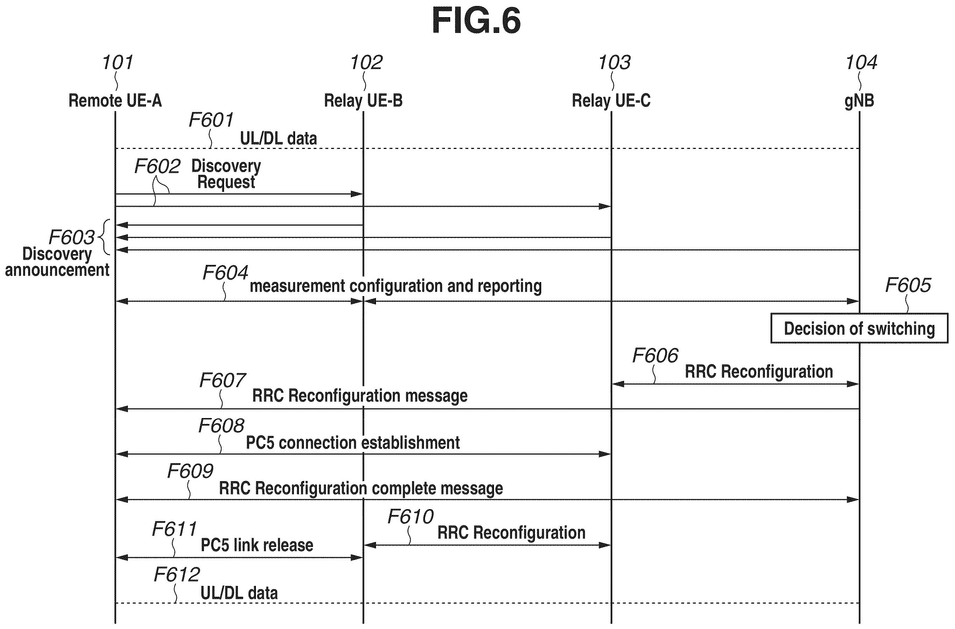

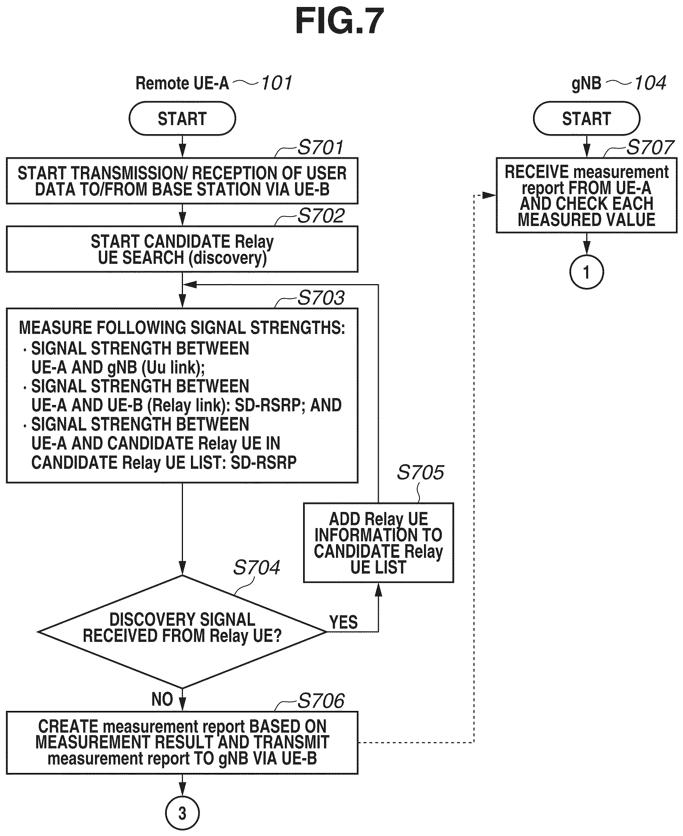

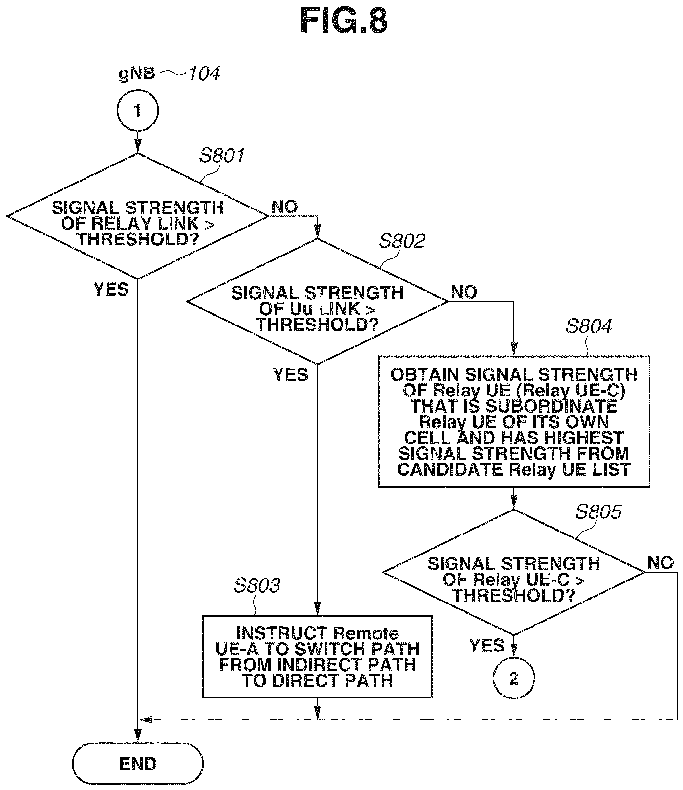

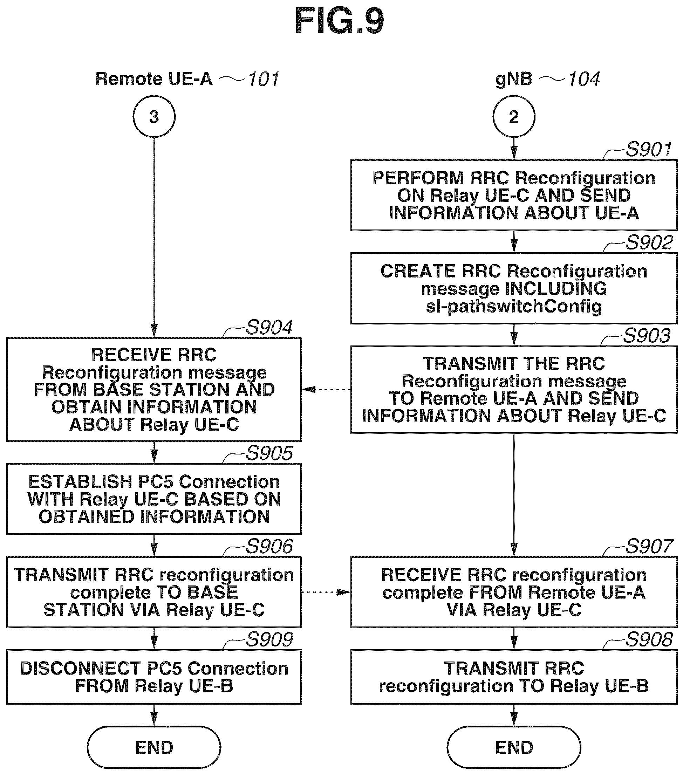

An operation according to the present embodiment will be described with reference to an operation sequence diagram illustrated in Fig. 6 and flowcharts illustrated in Figs. 7, 8, and 9.

Fig. 6 is an example of a sequence for switching from an indirect path to another indirect path according to the present embodiment. Figs. 7, 8, and 9 are flowcharts illustrating the contents of the sequence of Fig. 6 between the gNB 104 and the Remote UE-A 101 according to the present embodiment.

In the gNB 104, the control unit 201 executes a control program stored in the storage unit 202, thereby implementing each processing in the gNB as illustrated in the flowchart. In the Remote UE-A 101, the control unit 301 executes a control program stored in the storage unit 302, thereby implementing each processing in the UE as illustrated in the flowchart. Assume that a part of the processing is implemented by operating the above-described hardware and functional units in cooperation.

In the present embodiment, the Remote UE-A 101 uses the Sidelink Relay processing unit 304 to connect to the base station via the Sidelink Relay processing unit 404 in the Relay UE-B 102. The Remote UE-A 101 is transmitting and receiving user data (such as streaming data) (F601, S701).

Next, during transmission and reception of the data, the control unit 301 in the Remote UE-A 101 activates the message generation processing unit 305. The message generation processing unit 305 creates a discovery request signal and transmits the discovery request signal to the Relay UE-B 102 and the Relay UE-B 103 through the wireless communication unit 307 (F602). The control unit 301 activates the message analysis processing unit 306 to prepare for message analysis to be performed upon reception of the response signal corresponding to the discovery request signal or the discovery request signal from neighboring relay UEs including the Relay UE-B 102 through the wireless communication unit 307 (i.e., execution of discovery is started) (S702). The Relay UE-B 102 that has received the discovery request signal also transmits a discovery response signal to the Remote UE-A 101 (F603).

Next, the signal strength measurement unit 303 that has been preliminarily activated by the control unit 301 in the Remote UE-A 101 starts measurement of the "signal strength between the Remote UE-A 101 and the gNB 104 (hereinafter referred to as "Uu link")" and the "signal strength between the Remote UE-A 101 and the Relay UE-B 102 (hereinafter referred to as "relay link")" (F603, S703). The signal strength of the relay link is obtained by measuring the discovery reference signal strength SD-RSRP transmitted by the Relay UE-B 102.

If the wireless communication unit 307 receives the discovery signal from the neighboring relay UE and the response signal corresponding to the discovery signal, the message analysis processing unit 306 analyzes the signals. The ID of the relay UE that has transmitted the signal and a serving cell ID are stored in a candidate relay UE list stored in the storage unit 302 (S704, S705).

If there is a candidate relay UE in the candidate relay UE list, the signal strength measurement unit 303 starts measurement of the signal strength between the Remote UE-A 101 and the candidate relay UE (S703). The signal strength measurement unit 303 measures the discovery reference signal strength SD-RSRP based on the discovery signal from the candidate relay UE (F603).

Fig. 6 illustrates a case where the Relay UE-C is found as a candidate relay UE.

The Remote UE-A 101 follows an event preliminarily designated by a Measurement configuration from the gNB 104.

The message generation processing unit 305 creates Measurement report in which information indicating the "signal strength of the Uu link", the "signal strength of the relay link", and the "signal strength between the Remote UE-A 101 and the candidate relay UE in the candidate relay UE list" is stored. The created Measurement report is transmitted to the gNB 104 via the wireless communication unit 307 (F604, S706).

When the wireless communication unit 207 in the gNB 104 receives the Measurement report, the Measurement report is transmitted to the message analysis processing unit 206 and analyzed. An analysis result from the processing unit 206 is transmitted to the path switch determination processing unit 204 and checked (S707). In other words, the processing unit 204 functions as acquisition means for acquiring the signal strengths of the three links described above.

In this case, at least the "signal strength of the relay link" and the "signal strength between the Remote UE-A 101 and the candidate relay UE in the candidate relay UE list" are obtained using the discovery reference signal strength SD-RSRP. This enables the gNB 104 to make a comparison based on the same index. In other words, the processing unit 204 also functions as comparison means for comparing signal strengths.

The Remote UE-A 101 may notify the gNB 104 of the result of the discovery reference signal strength SD-RSRP regularly or irregularly. In the case of transmitting the result irregularly, the result may be transmitted in response to, for example, an instruction from the gNB 104. The Remote UE-A 101 may also detect SD-RSRP of each relay UE, as needed, and may transmit the result within a certain period of time, when there is a fluctuation of, for example, 20 dB or more. Note that 20 dB is merely an example, and this indicates that a certain threshold can be set, and a notification can be issued when the threshold is exceeded.

A specific path switching method will be described below.

If the signal strength of the relay link in the Remote UE-A 101 is more than or equal to a threshold, the path switch determination processing unit 204 determines that the relay can be continued and completes determination processing without performing any further processing (S801). If the signal strength is less than the threshold, the path switch determination processing unit 204 determines that it is difficult to continue the relay, and checks the signal strength of the Uu link in the Remote UE-A 101. If the signal strength is more than or equal to the threshold, the path switch determination processing unit 204 issues an instruction to switch from the indirect path to the direct path to the Remote UE-A 101 to cause the Remote UE-A 101 to perform path switching processing (S802, S803).

If the signal strength of the Uu link in the Remote UE-A 101 is less than the threshold, the path switch determination processing unit 204 determines that it is difficult to continue the relay even if the path is switched to the direct path. The path switch determination processing unit 204 then checks the candidate relay UE list and obtains signal strength information about the relay UE (Relay UE-C 103) having the highest signal strength and the same serving cell ID as that of the path switch determination processing unit 204 itself (S804).

If the signal strength with the Relay UE-C 103 in the Remote UE-A 101 is less than the threshold, the path switch determination processing unit 204 determines that it is difficult to continue the relay in every path, and thus completes the path switching processing (S805).

If the signal strength with the Relay UE-C 103 in the Remote UE-A 101 is more than or equal to the threshold, the path switch determination processing unit 204 switches the path to the indirect path via the Relay UE-C 103. The path switch determination processing unit 204 thereby determines that the Remote UE-A 101 can continue the services (streaming and the like) under execution and issues a notification indicating that it is necessary to switch the path from the indirect path to another indirect path, to the control unit 201 (F605, S805).

The control unit 201 performs RRC reconfiguration on the Relay UE-C 103. Specifically, the control unit 201 transmits an RRC reconfiguration message to the Relay UE-C via the message generation processing unit 205 and the wireless communication unit 207. The control unit 201 thereby issues a notification indicating information required to establish Sidelink relay communication with the Remote UE-A 101. The required information includes sl-L2Relay UE-Config. The sl-L2Relay UE-Config includes information used for a Sidelink Relay Adaptation Protocol (SRAP) protocol required to operate as a relay UE. The control unit 201 confirms the reception of an RRC reconfiguration complete message from the Relay UE-C 103 via the wireless communication unit 207 and the message analysis processing unit. The control unit 201 thereby completes RRC reconfiguration for the Relay UE-C 103 (F606, S901).

Next, the control unit 201 performs RRC reconfiguration on the Remote UE-A 101. In other words, the control unit 201 transmits an RRC reconfiguration message to the Remote UE-A 101 via the message generation processing unit 205 and the wireless communication unit 207. The control unit 201 thereby issues a notification indicating information required to establish Sidelink relay communication with the Relay UE-C 103. The required information includes sl-L2RemoteUE-Config. The sl-L2RemoteUE-Config includes information to be used for the Sidelink Relay Adaptation Protocol (SRAP) protocol required to operate as a remote UE (F607, S903).

In this case, the message generation processing unit adds sl-PathSwitchConfig in which the ID of the Relay UE-C 103 is stored into ReconfigurationWithSync in the RRC reconfiguration message. The message generation processing unit can thereby issue a notification indicating switching from the indirect path via the Relay UE-B 102 to the indirect path via the Relay UE-C 103 to the Remote UE-A 101 (S903).

The control unit 301 in the Remote UE-A 101 confirms the reception of the RRC reconfiguration message from the gNB 104 via the wireless communication unit 307 and the message analysis processing unit 306. In this case, the control unit 301 checks the ID of the Relay UE-C 103 based on the sl-Path Switch Config. The control unit 301 thereby determines that the path is switched from the indirect path via the Relay UE-B 102 to the indirect path via the Relay UE-C 103 (F607, S904).

Next, the control unit 301 stops data transmission and reception to and from the Relay UE-B 102 and establishes communication with the Relay UE-C 103 (F608, S905). Thereafter, the Remote UE-A 101 and the Relay UE-B 103C can use Sidelink relay communication based on the SRAP protocol information acquired in the RRC reconfiguration message. In other words, the Remote UE-A 101 can transmit and receive data to and from the gNB 104 via the Relay UE-C 103.

After the communication with the Relay UE-C 103 is established, the control unit 301 causes the message generation processing unit 305 to generate an RRC reconfiguration complete message. The Sidelink Relay processing unit 304 and the wireless communication unit 307 transmit the RRC reconfiguration complete message to the gNB 104 via the Relay UE-C 103 (F609, S906). In this case, the RRC reconfiguration complete message is not transmitted via the Relay UE-B 102.

The gNB 104 receives the RRC reconfiguration complete message from the Remote UE-A 101 via the Relay UE-C 103 through the wireless communication unit 207 and the message analysis processing unit 206. Thus, it can be determined that switching of the indirect path for the Remote UE-A 101 is completed (F609, S907).

After completion of switching of the indirect path for the Remote UE-A 101, the gNB 104 performs RRC reconfiguration on the Relay UE-B 102. The Sidelink relay function for the Remote UE-A 101 is then released (F610, S908).

In contrast, the Remote UE-A 101 releases the link with the Relay UE-B 102 (F611, S909).

By the processing described above, the Remote UE-A 101 transmits the discovery reference signal strength SD-RSRP of each of the connected Relay UE-B 102 and the candidate relay UE to the gNB 104. The signal strengths of the same physical channel can thereby be compared, and an appropriate candidate relay UE can be selected. The gNB 104 and the Remote UE-A 101 can also switch the path from an indirect path to another indirect path without interrupting services.

In the present embodiment, a configuration has been described in which SD-RSRP is measured as the "signal strength between the Remote UE-A 101 and the Relay UE-B 102" and the "signal strength between the Remote UE-A 101 and the candidate relay UE" to be compared with each other. However, as the signal strengths between the UE described above, Sidelink Reference Signal Received Power (SL-RSRP) based on the physical channel PSBCH can also be measured. Accordingly, SL-RSRP measurement results may be compared with each other.

In contrast, in the present embodiment, control processing is performed so as to prevent comparison between measurement results based on different measurement indices such as SD-RSRP and SL-RSRP. For example, control processing to compare an SL-RSRP measurement result for the "signal strength between the Remote UE-A 101 and the Relay UE-B 102" with an SD-RSRP measurement result for the "signal strength between the Remote UE-A 101 and the candidate relay UE" is not performed.

### [Second Embodiment]

In the first embodiment, the configuration in which a relay UE is appropriately selected from two relay UEs connected to one base station and the switching flow have been described. In a second embodiment, a configuration in which one relay UE is connected to each of two base stations will be described. Functional configurations (Figs. 2, 3, and 4) of each communication device according to the second embodiment are similar to those of the first embodiment.

### [System Configuration]

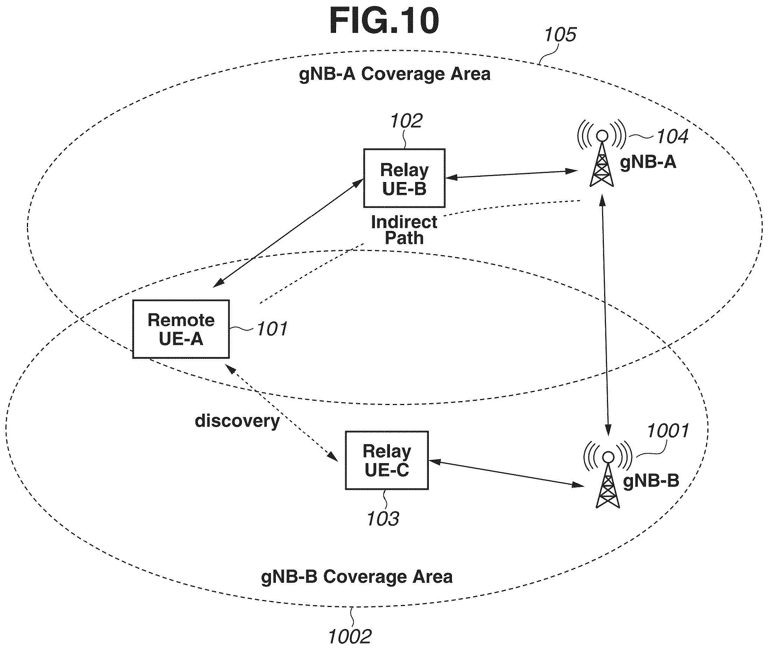

Fig. 10 is a diagram illustrating a configuration example of a system according to the present embodiment. Descriptions of the same reference numerals in Fig. 1 are omitted. In Fig. 10, the Remote UE-A 101 is transmitting and receiving data to and from the gNB-A 104 on an indirect path (indirect path illustrated in Fig. 10) with the Relay UE-B 102.

The Relay UE-C (103) includes a Sidelink relay function and thus can operate as relay UE. Unlike in the first embodiment, the Relay UE-C (103) is connected to a gNB-B (1001). The gNB-A 104 and a gNB-B 1101 can be connected with a wire or wirelessly to communicate with each other.

### (Processing Example)

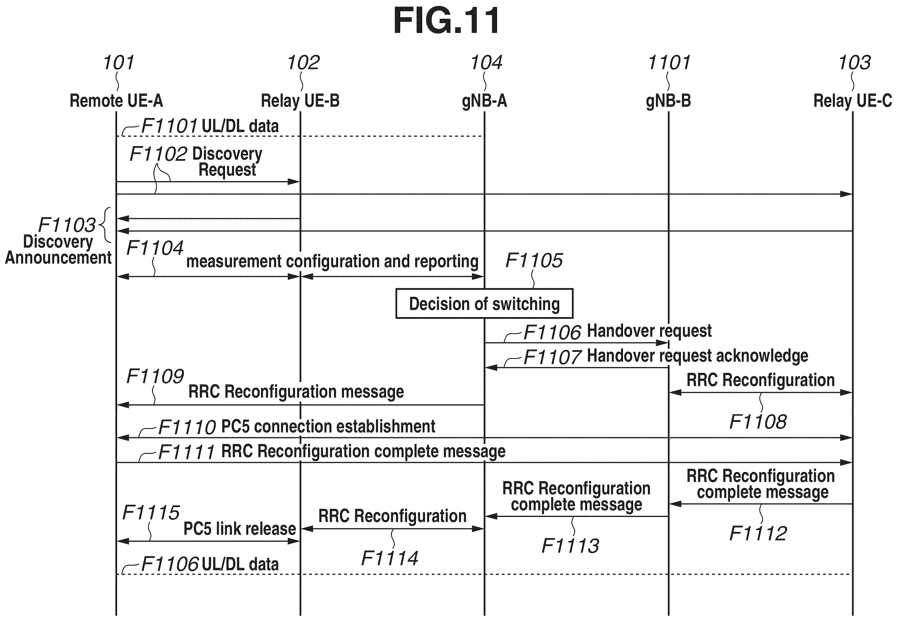

An operation according to the present embodiment will be described with reference to a sequence illustrated in Fig. 11. The Remote UE-A 101 is transmitting and receiving user data (e.g., streaming data) to and from the base station via the Sidelink relay function 404 in the Relay UE-B 102 using the Sidelink Relay processing unit 304 (F1101). During transmission and reception of the data, the control unit 301 in the Remote UE-A 101 activates the message generation processing unit 305 to create a discovery signal request. Thereafter, the Remote UE-A 101 transmits the discovery request to the Relay UE-B 102 and the Relay UE-B 103 through the wireless communication unit 307 (F1102). The Relay UE-B 102 that has received the discovery request transmits a discovery signal to a neighboring UE (F1103).

Next, the signal strength measurement unit 303 preliminarily activated by the control unit 301 in the Remote UE-A 101 starts measurement of the "signal strength of the Uu link" and the "signal strength of the relay link" (F1103, S703). The signal strength of the relay link is obtained by measuring the discovery reference signal strength SD-RSRP transmitted from the Relay UE-B 102.

If there is a candidate relay UE in the candidate relay UE list, the signal strength measurement unit 303 starts measurement of the signal strength between the Remote UE-A 101 and the candidate relay UE. The signal strength measurement unit 303 measures the discovery reference signal strength SD-RSRP based on the discovery signal from the candidate relay UE (F1103).

The Remote UE-A 101 follows an event preliminarily designated by the Measurement configuration from the gNB-A 104.

The message generation processing unit 305 creates Measurement report in which information regarding the "signal strength of the Uu link", the "signal strength of the relay link", and the "signal strength between the Remote UE-A 101 and the candidate relay UE in the candidate relay UE list" is stored. The created Measurement report is then transmitted to the gNB-A 104 via the wireless communication unit 307 (F1104, S706).

If the wireless communication unit 207 in the gNB 104 receives the Measurement report, the Measurement report is transmitted to the message analysis processing unit 206 and analyzed. A result analyzed by the processing unit 206 is transmitted to the path switch determination processing unit 204 and checked (S707). In other words, the processing unit 204 functions as acquisition means for acquiring the signal strengths of the three links described above. This enables the gNB 104 to make a comparison based on the same index.

In this case, the "signal strength of the relay link" and the "signal strength between the Remote UE-A 101 and the candidate relay UE in the candidate relay UE list" are also obtained using the discovery reference signal strength SD-RSRP. This enables the gNB-A 104 to make a comparison based on the same index. In other words, the processing unit 204 also functions as comparison means for comparing signal strengths.

Based on the SD-RSRP, the path switch determination processing unit 204 determines switching of the path to the Relay UE-C 103 under the control of the gNB-B 1001 (F1105).

### (Handover Processing)

The gNB-A 104 requests the gNB-B 1001 to perform a handover of the Remote UE-A 101 (F1106). This request to be transmitted to the gNB-B 1001 includes information about the Remote UE-A 101 and also includes information indicating a path via the Relay UE-B 102.

If the Remote UE-A 101 can perform a handover, the gNB-B 1001 that has received the handover request notifies the gNB-A 104 of a response message corresponding to the handover request (F1107).

The control unit 201 in the gNB-B 1001 performs RRC reconfiguration on the Relay UE-C 103. The control unit 201 transmits an RRC reconfiguration message to the Relay UE-C, thereby issuing a notification indicating information required to establish Sidelink relay communication with the Remote UE-A 101. Reception of the RRC reconfiguration complete message from the Relay UE-C 103 is confirmed and thus RRC reconfiguration on the Relay UE-C 103 is completed (F1108).

Next, the control unit 201 in the gNB-B 104 performs RRC reconfiguration on the Remote UE-A 101. The control unit 201 transmits an RRC reconfiguration message to the Remote UE-A 101, thereby issuing a notification indicating information required to establish Sidelink relay communication with the Relay UE-C 103. The required information includes sl-L2RemoteUE-Config. The sl-L2RemoteUE-Config includes information to be used for the Sidelink Relay Adaptation Protocol (SRAP) protocol required to operate as a remote UE (F1109).

In this case, the message generation processing unit adds sl-PathSwitchConfig in which the ID of the Relay UE-C 103 is stored into ReconfigurationWithSync of RRC reconfiguration message. This makes it possible to issue a notification indicating switching from the indirect path via the Relay UE-B 102 to the indirect path via the Relay UE-C 103, to the Remote UE-A 101.

The control unit 301 in the Remote UE-A 101 confirms the reception of the RRC reconfiguration message from the gNB-A 104. In this case, the ID of the Relay UE-C 103 is checked based on the sl-PathSwitchConfig. It is thereby determined that the path is switched from the indirect path via the Relay UE-B 102 to the indirect path via the Relay UE-C 103 (F1109).

Next, the control unit 301 in the Remote UE-A 101 stops transmission and reception of data to and from the Relay UE-B 102 and establishes communication with the Relay UE-C 103 (F1110). Thereafter, the Remote UE-A 101 and the Relay UE-B 103C can use Sidelink relay communication based on the SRAP protocol information acquired in the RRC reconfiguration message. In other words, the Remote UE-A 101 can transmit and receive data to and from the gNB-B 1001 via the Relay UE-C 103.

After the communication with the Relay UE-C 103 is established, the control unit 301 causes the message generation processing unit 305 to generate an RRC reconfiguration complete message. The Sidelink Relay processing unit 304 and the wireless communication unit 307 transmit the RRC reconfiguration complete message to the gNB-B 1001 via the Relay UE-C 103 (F1111, F1112). In this case, the RRC reconfiguration complete message is not transmitted via the Relay UE-B 102. Further, the gNB-B 1101 notifies the gNB-A 104 of the RRC reconfiguration complete message (F1113).

The gNB-A 104 receives the RRC reconfiguration complete message, thereby making it possible to determine that switching of the indirect path for the Remote UE-A 101 has been completed (F1111, F1112, F1113).

After switching of the indirect path for the Remote UE-A 101 is completed, the gNB-A 104 performs RRC reconfiguration on the Relay UE-B 102. Then, the Sidelink relay function for the Remote UE-A 101 is released (F1114).

In contrast, the Remote UE-A 101 releases the link with the Relay UE-B 102 (F1115).

As described above, the Remote UE-A 101 transmits the discovery reference signal strength SD-RSRP of each of the connected Relay UE-B 102 and the candidate relay UE to the gNB-A 104, thereby making it possible to select an appropriate candidate relay UE. Furthermore, switching of the relay UE between different base stations can be appropriately performed.

A configuration can also be employed in which control processing according to the second embodiment is performed in addition to control processing according to the first embodiment. For example, in the case of selecting a relay UE in a configuration in which two or more relay UEs are connected to each of two base stations, the first embodiment and the second embodiment may be carried out at once, so that an appropriate relay UE can be selected. More specifically, if the gNB-A 104 can find a candidate for a suitable relay UE through the control processing described in the first embodiment, switching processing may be performed on the candidate for the relay UE. In contrast, if the gNB-A 104 cannot find any candidate for a suitable relay UE through the control processing according to the first embodiment and can find a suitable relay UE through the control processing described in the second embodiment, switch control processing involving handover processing according to the second embodiment may be performed.

Like in the first embodiment, also in the present embodiment, a configuration in which SD-RSRP is measured for comparison is described. However, SL-RSRP measurement results may also be compared with each other.

While the first and second embodiments illustrate an example where one candidate relay UE can be found, the present disclosure can also be applied to a case where two or more candidate relay UEs can be found. In this case, the SD-RSRP of all of the found candidate relays may be measured and an optimum one may be selected.

In the first and second embodiments, in a case where the remote UE searches for candidate relay UEs, the remote UE receives a 5G ProSe UE-to-Network Relay direct discovery Announcement message or Additional Information. The remote UE thereby executes processing for searching for peripheral candidate relay UEs. The remote UE may also receive the above-described signals from the connected relay UE.

Further, the remote UE may also be configured, in the case of searching for candidate relay UEs, to perform processing for voluntarily searching for candidate UEs as well as the above-described search processing, or in place of the above-described search processing in which signals transmitted from the peripheral UEs are received to thereby search for candidates.

In this case, specifically, the remote UE transmits Soliciation message of 5G ProSe UE-to-Network Relay direct discovery in the case of searching for candidate relay UEs. If the remote UE can receive a response to the Soliciatioin message, it is assumed that a candidate relay UE has been found. The remote UE may also transmit the above-described signals to the connected relay UE and receive a response to the Soliciatioin message from the relay UE.

### [Other Embodiments]

The present invention can also be implemented by the following processing. That is, a program for implementing one or more functions according to the above-described embodiments is supplied to a system or an apparatus via a network or a storage medium. One or more processors in a computer in the system or the apparatus read out the program and execute the program. The present invention can also be implemented by a circuit (e.g., an application-specific integrated circuit (ASIC)) for implementing one or more functions.

The invention is not limited to the above-described embodiments, and various alterations and modifications can be made without departing from the spirit and scope of the invention. Accordingly, the claims are attached to publicize the scope of the invention.

This application is based upon and claims the benefit of priority from Japanese patent application No. 2023-104563, filed on June 26, 2023, the disclosure of which is incorporated herein in its entirety by reference.

## Claims

1. A base station comprising, in a case where communication between a first user equipment (UE) and the base station is in a first state where relay communication to be implemented via a second UE for relaying communication is executed:
acquisition means for acquiring first signal strength information indicating a signal strength between the first UE and the second UE and second signal strength information indicating a signal strength between the first UE and a third UE that is disconnected from the first UE; and
comparison means for comparing the first signal strength information with the second signal strength information in the first state,
wherein the first signal strength information and the second signal strength information are information indicating signal strengths of a same physical channel.

2. The base station according to Claim 1, further comprising processing means for issuing, based on a comparison result from the comparison means, an instruction to switch from the first state to a second state for communicating with the first UE via the third UE.

3. The base station according to Claim 1, further comprising processing means for issuing, based on a comparison result from the comparison means, an instruction to switch from the first state to a third state for the first UE to communicate with another base station via the third UE connected to the other base station.

4. The base station according to any one of Claims 1 to 3, wherein the physical channel is a channel used for the first UE to search for a neighboring UE.

5. The base station according to any one of Claims 1 to 4, wherein the physical channel is a Physical Sidelink Discovery CHannel (PSDCH).

6. The base station according to any one of Claims 1 to 5, wherein the first UE transmits a Physical Sidelink Discovery CHannel (PSDCH) with enabled Cyclic Redundancy Check (CRC) to the second UE and the third UE.

7. The base station according to any one of Claims 1 to 6, wherein the first signal strength information and the second signal strength information indicate a measurement result of Sidelink Discovery Reference Signal Received Power (SD-RSRP).

8. A communication device comprising, in a first state where relay communication to be implemented via a first UE for relaying communication is executed:
search means for searching for second UE different from the first UE in a case where communication between the communication device and a base station is;
measurement means for measuring a first signal strength and a second signal strength, the first signal strength being a strength of a signal received from the first UE in the first state, the second signal strength being a strength of a signal received from the second UE;
notification means for notifying the base station of information about the first signal strength and information about the second signal strength in the first state; and
reception means for receiving a switching instruction from the base station having received the information about the first signal strength and the information about the second signal strength,
wherein the first signal strength and the second signal strength are signal strengths of a same physical channel.

9. The communication device according to Claim 8, further comprising switching means for performing processing to switch from the first state to a second state to communicate with the base station via the second UE based on reception of the switching instruction.

10. The communication device according to Claim 8, further comprising switching means for performing processing to switch from the first state to a third state to communicate with another base station via the second UE connected to the other base station based on reception of the switching instruction.

11. The communication device according to any one of Claims 8 to 10, wherein the physical channel is a channel used during a search for a neighboring UEs.

12. The communication device according to any one of Claims 8 to 11, wherein the physical channel is Physical Sidelink Discovery CHannel (PSDCH).

13. The communication device according to any one of Claims 8 to 12,
wherein the search is executed by the search means based on a discovery procedure, and
wherein the discovery procedure is a procedure to discover the second UE by receiving a 5G ProSe UE-to-Network Relay direct discovery Announcement message or Additional Information.

14. The communication device according to any one of Claims 8 to 13,
wherein the search is executed by the search means based on a discovery procedure, and
wherein the discovery procedure is a procedure to discover the second UE by transmitting a Soliciation message of 5G ProSe UE-to-Network Relay direct discovery and receiving a response to the Soliciatioin message.

15. The communication device according to any one of Claims 8 to 14, wherein the notification means issues a notification indicating information about the first signal strength and information about the second signal strength in one message.

16. A control method for controlling communication comprising, in a case where communication between a first User Equipment (UE) and a base station is in a first state where relay communication to be implemented via a second UE for relaying communication is executed:
acquiring first signal strength information indicating a signal strength between the UE and the second UE and second signal strength information indicating a signal strength between the first UE and a third UE that is disconnected from the first UE;
comparing, in the first state, the first signal strength information with the second signal strength information; and
processing for issuing an instruction to switch from the first state to a second state to communicate with the first UE via the third UE,
wherein the first signal strength information and the second signal strength information indicate signal strengths of a same physical channel.

17. A program for causing a computer to execute processing of, in a case where communication between a first User Equipment (UE) and a base station is in a first state where relay communication to be implemented via a second UE for relaying communication is executed:
acquiring first signal strength information indicating a signal strength between the first UE and the second UE and second signal strength information indicating a signal strength between the first UE and a third UE that is disconnected from the first UE;
comparing, in the first state, the first signal strength information with the second signal strength information; and
processing for issuing an instruction to switch from the first state to a second state to communicate with the first UE via the third UE,
wherein the first signal strength information and the second signal strength information indicate signal strengths of a same physical channel.
